# EUROPEAN PATENT APPLICATION

(11) **EP 2 816 812 A2**
(43) Date of publication of application: **24.12.2014**
(21) Application number: 14152127.8
(22) Date of filing: 22.01.2014
(51) Int. Cl.: H04N 21/414, B60K 35/00, H04H 20/00, H04N 21/422, H04N 21/4223, H04N 21/45, H04N 21/475, H04N 21/478, H04N 21/482

(54) **Method and system for gaze detection and advertisement information exchange**

(30) Priority: 19.06.2013 IN MU20832013
(71) Applicant: Tata Consultancy Services Limited, Mumbai 400 021 (IN)
(72) Inventor: Goswami, Vibhor, 560066 Bangalore (IN); Garg, Shalin, 560066 Bangalore (IN); Vallat, Sathish, 560066 Bangalore (IN)
(74) Representative: Meissner, Bolte & Partner GbR

(57) **Abstract**

Disclosed is a method and system for displaying a content published on a broadcasting device to a user. The system comprises a plurality of sensors deployed around the user. The system further comprises an image capturing module to capture the content along with a first metadata. An activity capturing module is configured to capture one or more behavioral activity data along with a second metadata. In one aspect, the one or more behavioral activity data is indicative of interest of the user in the content and the second metadata is associated with the one or more behavioral activity data. An analytics engine is configured to analyze the first metadata and the second metadata to determine a subset of content of the content that may be relevant to the user. A display module is configured to display the subset of content on a display device for reference of the user.

## Description

### TECHNICAL FIELD

The present subject matter described herein in general relates to wireless communication, and more particularly to a system and method for establishing instantaneous wireless communication between a transmission device and a reception device for information exchange.

### BACKGROUND

At present, the traditional way of advertising or publishing advertisement in an outdoor environment, typically known as out-of-home advertisement, is by means of a physical advertising medium such as billboard, or a signage, or a hoarding, or a display board generally placed at the top of designated market areas. The physical advertising medium is a large outdoor advertising structure, generally found in high traffic areas such as alongside busy roads. Further the physical advertising medium renders large advertisements to the passing pedestrians and drivers located primarily on major highways, expressways or high population density market place.

The physical advertising medium acts as either basic display units or static display units that showcase preloaded advertisements like shop hoardings, sale signs, and glass display boards, displaying static information or preloaded advertisements. These are conceptualized for human consumption (via human vision) and are limited by display area available. In such a scenario, the physical advertising medium (billboards, signage or display boards) are generally placed outdoors which are mostly missed by people while commuting or roaming in the high population density market place. Further at times it also becomes a means of distraction for the drivers or commuters while driving the vehicle at a high speed on a highway. Though at times the advertisements may be relevant to the drivers and may be of their interest, the drivers may overlook or miss the advertisements, since the vehicle may be driven at speed. In such cases, the advertisers' establishments are at enormous loss as they keep investing on the physical advertising mediums to promote their products or services.

It is often the case that the information published on the physical advertising medium i.e. billboard or signage or business establishment may or may not be viewed or captured by the person while driving the vehicle. In order to capture the information, the person tends to slow down the speed of the vehicle and further focus on the information published on the physical advertising medium. Such activities may distract the person from the primary task of driving and thereby compromise on the safety measures as the person may be driving on the busy roads or on the highways where lane discipline is necessary. Apart from the safety measures, the person may sometimes find it difficult to recall the information captured which the person viewed while driving the vehicle.

### SUMMARY

Before the present systems and methods, are described, it is to be understood that this application is not limited to the particular systems, and methodologies described, as there can be multiple possible embodiments which are not expressly illustrated in the present disclosures. It is also to be understood that the terminology used in the description is for the purpose of describing the particular versions or embodiments only, and is not intended to limit the scope of the present application. This summary is provided to introduce aspects related to systems and methods for displaying a content published on a broadcasting device to a user and the aspects are further described below in the detailed description. This summary is not intended to identify features of the claimed subject matter nor is it intended for use in determining or limiting the scope of the claimed subject matter.

In one implementation, a system for displaying a content published on a broadcasting device to a user is disclosed. In one aspect, the content may comprise but not limited to at least one of an advertisement information, weather information, news information, sports information, places/physical location information, movie information, hospital or a mall and stock-market information. In one aspect, the system comprises a processor, a plurality of sensors coupled with the processor, and a memory. The processor is capable of executing a plurality of modules stored in the memory. The plurality of modules may further comprise an image capturing module, an activity capturing module, an analytics engine and a display module. In one aspect, the image capturing module is configured to capture the content along with a first metadata associated with the content. The first metadata may comprise but not limited to at least one of a time-stamp, global positioning system (GPS) co-ordinates, orientation and an angle of capturing the content wherein the time-stamp of the content captured, the global positioning system (GPS) co-ordinates of a location from where the content is captured, the orientation and the angle of capturing the content. The activity capturing module is configured to capture one or more behavioral activity data along with a second metadata. In one aspect, the one or more behavioral activity data may comprise but not limited to at least one of a gaze, a facial gesture, a head gesture, a hand gesture, a variance in heartbeat, a variance in blood pressure, and a variance in acceleration of a vehicle driven by the user. The second metadata may comprise but not limited to at least one of a time-stamp, a global positioning system (GPS) co-ordinates, a orientation of the user and an angle of viewing the content by the user wherein the time-stamp of the behavioral activities being captured, the global positioning system (GPS) co-ordinates of a location from where the behavioral activities being captured, the orientation of the user or the angle of viewing of the content by the user. In one aspect, the one or more behavioral activity data is captured from the plurality of sensors that may be deployed around the user. After capturing the first metadata and the second metadata, the analytics engine is further configured to analyze the first metadata and the second metadata in order to determine a subset of content of the content that may be relevant to the user. Based on the analysis performed on the first metadata and the second metadata, the display module is configured to display the subset of content on a display device. Further, the subset of content may be stored in the memory for future reference.

In another implementation, a method for displaying a content published on a broadcasting device to a user is disclosed. The method comprises a plurality of steps performed by a processor. In one aspect, a step is performed for capturing the content along with a first metadata associated with the content. The method further comprises a step for capturing one or more behavioral activity data along with a second metadata. In one aspect, the one or more behavioral activity data is captured from a plurality of sensors deployed around the user. The one or more behavioral activity data captured may be indicative of interest of the user in the content. Subsequent to capturing the first metadata and the second metadata, the method further comprises a step of analyzing the first metadata and the second metadata in order to determine a subset of content of the content that may be relevant to the user. The method further comprises a step of displaying the subset of content on a display device. Further, the subset of content may be stored in a memory for future reference.

In yet another implementation, a computer program product having embodied thereon a computer program for displaying a content published on a broadcasting device to a user is disclosed. The computer program product comprises a program code for capturing the content along with a first metadata associated with the content. The computer program product further comprises a program code for capturing one or more behavioral activity data along with a second metadata. The one or more behavioral activity data is captured from a plurality of sensors deployed around the user. In one aspect, the one or more behavioral activity data may be indicative of interest of the user in the content. The computer program product further comprises a program code for analyzing the first metadata and the second metadata in order to determine a subset of content of the content that may be relevant to the user. The computer program product further comprises a program code for the subset of content on a display device. Further, the subset of content may be stored in the memory for future reference.

### BRIEF DESCRIPTION OF THE DRAWINGS

The foregoing detailed description of embodiments is better understood when read in conjunction with the appended drawings. For the purpose of illustrating the invention, there is shown in the present document example constructions of the invention; however, the invention is not limited to the specific methods and apparatus disclosed in the document and the drawings.

The detailed description is described with reference to the accompanying figures. In the figures, the left-most digit(s) of a reference number identifies the figure in which the reference number first appears. The same numbers are used throughout the drawings to refer like features and components.
Figure 1 illustrates a network implementation of a system for displaying a content published on a broadcasting device to a user is shown, in accordance with an embodiment of the present subject matter.
Figure 2 illustrates the system, in accordance with an embodiment of the present subject matter.
Figure 3 illustrates the components of the system in accordance with an embodiment of the present subject matter.
Figure 4 illustrates various steps of a method for displaying a content published on a broadcasting device to a user, in accordance with an embodiment of the present subject matter.
Figure 5 illustrates a method for capturing one or more behavioral activity data and a second metadata, in accordance with an embodiment of the present subject matter.
Figure 6 is an exemplary embodiment illustrating a communication between the system and a broadcasting device, wherein the system is installed on a vehicle.

The figures depict various embodiments of the present invention for purposes of illustration only. One skilled in the art will readily recognize from the following discussion that alternative embodiments of the structures and methods illustrated herein may be employed without departing from the principles of the invention described herein.

### DETAILED DESCRIPTION

Some embodiments of this invention, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the exemplary, systems and methods are now described. The disclosed embodiments are merely exemplary of the invention, which may be embodied in various forms.

Various modifications to the embodiment will be readily apparent to those skilled in the art and the generic principles herein may be applied to other embodiments. For example, although the present invention will be described in the context of a system and method for displaying a content published on a broadcasting device to a user, one of ordinary skill in the art will readily recognize that the method and system can be utilized in any situation where there is need to display the content published on the broadcasting device to the user. Thus, the present invention is not intended to be limited to the embodiments illustrated, but is to be accorded the widest scope consistent with the principles and features described herein.

System and method for displaying a content, published on a physical advertising medium, to the user is described. The present subject matter discloses an effective and efficient mechanism that provides a means of communication between the physical advertising medium and the user by capturing the content published on the physical advertising medium based on various activities performed by the user. In one aspect, the physical advertising medium may be an audio visual device such as a billboard or a signage or a display board or an Out of Home advertising platform or a business establishment that may be located on a highway or on top of a building. The present invention utilizes advanced techniques such as gaze tracking, head movement to detect where the person is viewing in order to capture the content viewed by the user while driving the vehicle. The present invention further utilizes an image capturing unit such as camera for capturing the content published on the physical advertising medium. In one aspect, while capturing the content, the present invention also captures a first metadata associated with the content. Based on the capturing of content, the present invention facilitates the user to focus extensively on the primary task of driving. In one aspect, the content may be an advertisement information, weather information, news information, sports information, places/physical location information, movie information, hospital or a mall and stock-market information. The first metadata may comprise a time-stamp, a global positioning system (GPS) co-ordinates, orientation and an angle of capturing the content wherein the time-stamp of the content captured, the global positioning system (GPS) co-ordinates of a location from where the content is captured, the orientation or the angle of capturing the content and combinations thereof.

In addition to capturing the content along with the first metadata, the present invention is further enabled to capture behavioral activities of the user along with second metadata associated with the behavioral activities. In one aspect, the behavioral activities may comprise a gaze gesture, a facial gesture, a head gesture, a hand gesture, a variance in heartbeat, a variance in blood pressure, a variance in acceleration of a vehicle driven by the user and combinations thereof. The second metadata may comprise a time-stamp, a global positioning system (GPS) co-ordinates, a orientation of the user and an angle of viewing the content by the user wherein the time-stamp of the behavioral activities being captured, the global positioning system (GPS) co-ordinates of a location from where the behavioral activities being captured, the orientation of the user or the angle of viewing of the content by the user. In one aspect, the behavioral activities are captured from a plurality of sensors deployed around the user. In one example, the plurality of sensors may include at least one of a gaze detection sensor, a gesture detection sensor, a blood-pressure detection sensor, a heartbeat sensor, an accelerometer sensor, a gyroscope, a barometer, a GPS sensor and combinations thereof.

Subsequent to the capturing of the first metadata and the second metadata, the present invention is further adapted to analyze the first metadata and the second metadata in order to determine a subset of content of the content. In one aspect, the subset of content may be relevant to the user. In one aspect, the present invention may perform a search on Internet to obtain an additional content associated with the subset of content. The additional content may be searched by formulating one or more search strings using one or more keywords from the subset of content. In one aspect, the additional content and the subset of content may comprise at least one of a text, a hyper-link, an audio clip, a video, an image and combinations thereof.

The systems and methods, related to display the information published on the physical advertising medium as described herein, can be implemented on a variety of computing systems such as a desktop computer, a notebook or a portable computer, a vehicle infotainment system or a television or a mobile computing device or an entertainment device.

While aspects of the system and method for displaying the information published on the physical advertising medium to the user may be implemented in any number of different computing systems, environments, and/or configurations, the embodiments are described in the context of the following exemplary system.

The presently described embodiments will be best understood by reference to the drawings, wherein like parts are designated by like numerals throughout. Moreover, flowchart and block diagrams in the Figures illustrate the architecture, functionality, and operation of possible implementations of systems and methods according to various embodiments of the present invention. In this regard, each block in the flowchart or block diagrams may represent a module, segment, or portion of code, which comprises one or more executable instructions for implementing the specified logical function(s).

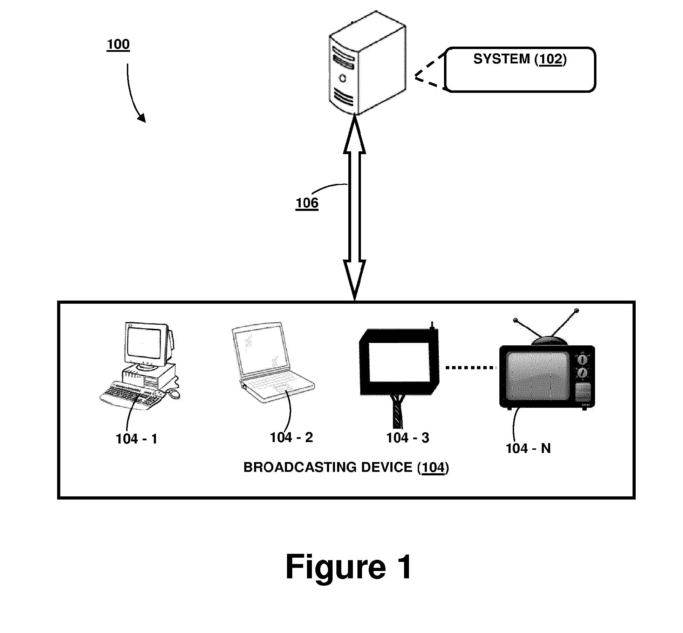

Referring now to Figure 1, an implementation of a system 102 for displaying a content published on a broadcasting device 104 to a user is illustrated, in accordance with an embodiment of the present subject matter. In one embodiment, the system 102 is enabled to capture the content along with a first metadata associated with the content. In one aspect, the content may comprise at least one of an advertisement information, weather information, news information, sports information, places/physical location information, movie information, hospital or a mall and stock-market information. In one aspect, the first metadata may comprise a time-stamp of the content captured, global positioning system (GPS) co-ordinates of a location from where the content is captured, orientation or an angle of capturing the content and combinations thereof. The system 102 may be further enabled to capture one or more behavioral activity data. In one aspect, the one or more behavioral activity data may be captured from a plurality of sensors deployed around the user. The one or more behavioral activity data may comprise at least one of a gaze, a facial gesture, a head gesture, hand gesture, variance in heartbeat, variance in blood pressure, and variance in acceleration of a vehicle driven by the user. In addition to capture the one or more behavioral activity data, the system 102 further captures a second metadata associated with the one or more behavioral activity data. In one aspect, the second metadata may comprise a time-stamp of the behavioral activities being captured, a global positioning system (GPS) co-ordinates of a location from where the behavioral activities being captured, orientation of the user or an angle of viewing of the content by the user. After capturing the first metadata and the second metadata, the system 102 is further enabled to analyze the first metadata and the second metadata captured in order to determine a subset of content of the content. In one aspect, the subset of content may be relevant to the user. Based on the analysis performed on the first metadata and the second metadata, the system 102 further displays the subset of content on a display device to the user or store the subset of content in the memory for reference.

Although the present subject matter is explained considering that the system 102 is implemented as an in-vehicle infotainment system, it may be understood that the system 102 may also be implemented in a variety of systems, such as a laptop computer, a desktop computer, a notebook, a workstation, a mainframe computer, a server, a network server, and the like. It will be understood that the system 102 may be used to capture the content published on the broadcasting device 104 through one or more broadcasting device 104-1, 104-2...104-N, collectively referred to as user hereinafter. Examples of the broadcasting device 104 may include, but are not limited to, a portable computer, a billboard, a television, and a workstation. The broadcasting device 104 is communicatively coupled to the system 102 through a communication channel 106. In one implementation, the communication channel 106 may be a wireless network such as Wi-Fi™ Direct, Wi-Fi™, Bluetooth™ or combinations thereof. The communication channel 106 can be implemented as one of the different types of networks, such as intranet, local area network (LAN), wide area network (WAN), the internet, and the like.

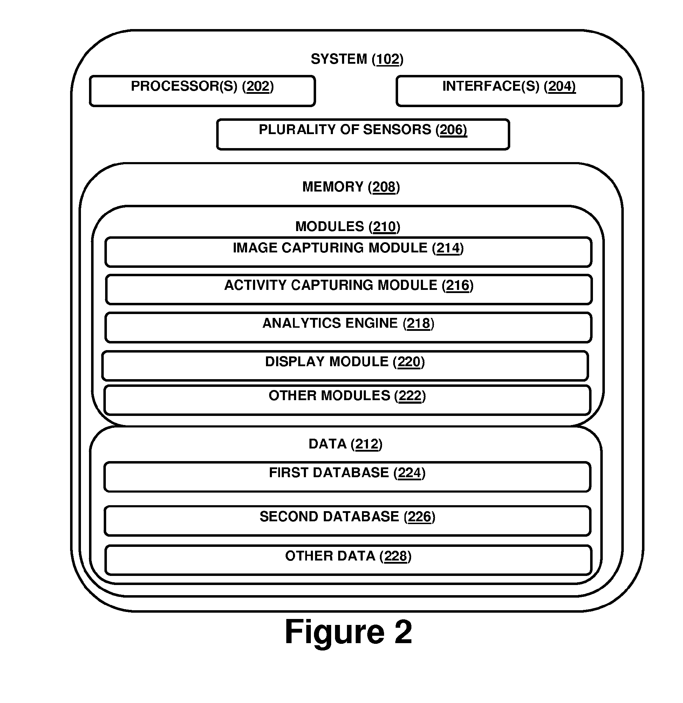

Referring now to Figure 2, the system 102 is illustrated in accordance with an embodiment of the present subject matter. In one embodiment, the system 102 may include a processor 202, an I/O interface 204, a plurality of sensors 206 and a memory 208. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions stored in the memory 208.

The plurality of sensors 206 may include but not limited to variety of sensors that are deployed around the user to capture various activities being performed by the user while viewing the content published on a broadcasting device such as billboard. The plurality of sensors 206 may comprise, but not limited to a gaze detection sensor or a gesture detection sensor or a blood-pressure detection sensor or a heartbeat sensor or an accelerometer sensor or a gyroscope or a barometer or a GPS sensor.

The I/O interface 204 may include a variety of software and hardware interfaces, for example, a web interface, a graphical user interface, and the like. The I/O interface 204 may allow the system 102 to interact with a user directly or through the client devices. Further, the I/O interface 204 may enable the system 102 to communicate with other computing devices, such as web servers and external data servers (not shown). The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 208 may include any computer-readable medium or computer program product known in the art including, for example, volatile memory, such as static random access memory (SRAM) and dynamic random access memory (DRAM), and/or nonvolatile memory, such as read only memory (ROM), erasable programmable ROM, flash memories, hard disks, optical disks, and magnetic tapes. The memory 208 may include modules 210 and data 212.

The modules 210 include routines, programs, objects, components, data structures, etc., which perform particular tasks or implement particular abstract data types. In one implementation, the modules 210 may include an image capturing module 214, an activity capturing module 216, an analytics engine 218, a display module 220 and other modules 222. The other modules 222 may include programs or coded instructions that supplement applications and functions of the system 102.

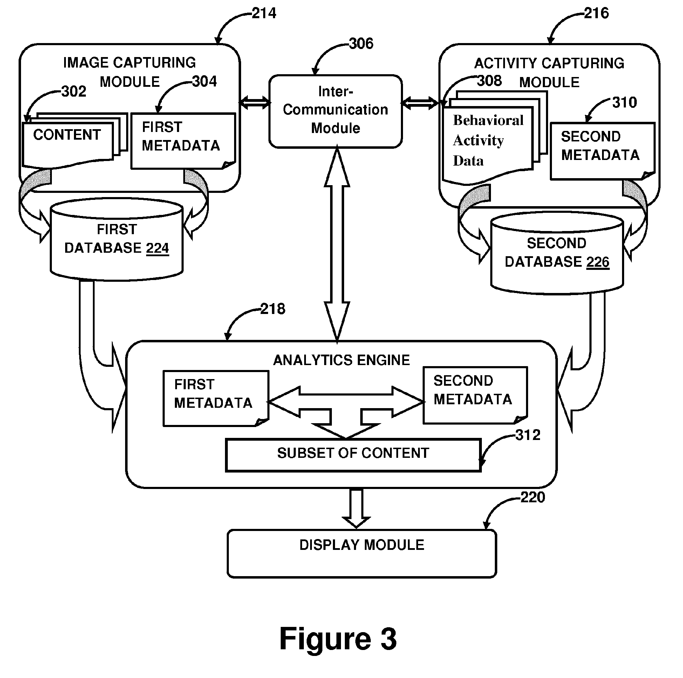

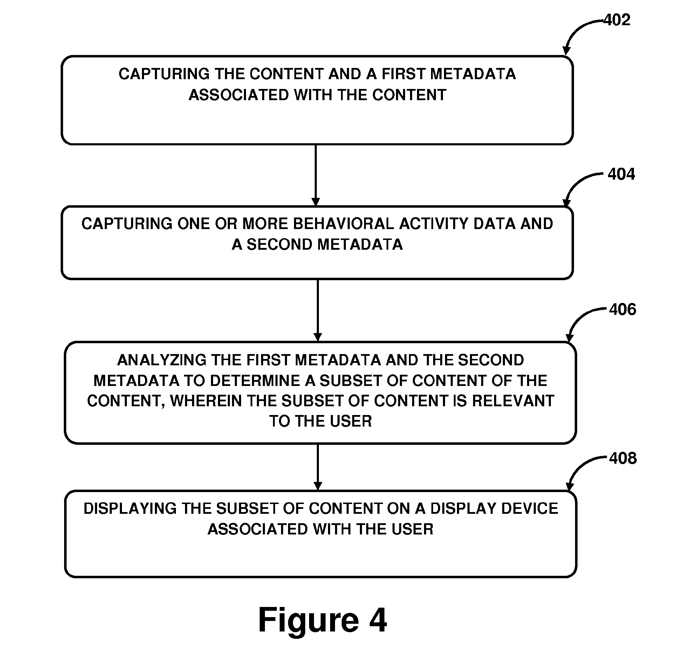

The data 212, amongst other things, serves as a repository for storing data processed, received, and generated by one or more of the modules 210. The data 212 may also include a first database 224, a second database 226 and other data 228. The other data 228 may include data generated as a result of the execution of one or more modules in the other modules 222. In one implementation, the working of the system 102 may be explained in detail in Figure 3 and Figure 4.

Referring to Figure 3, a detailed working of the components of the system 102 is illustrated, in accordance with an embodiment of the present subject matter. In one implementation, a method and system for displaying a content 302 published on a broadcasting device 104 to a user is disclosed herein. In one embodiment, the broadcasting device 104 is an audio visual device that may comprise, but not limited to a billboard, a signage, a display board, an Out of Home advertising platform, a business establishment and combinations thereof. In one aspect, the content 302 that is published on the broadcasting device 104 may be an advertisement information, weather information, news information, sports information places/physical location information, movie information, hospital or a mall and stock-market information.

In one embodiment of the invention, the system 102 comprises the image capturing module 214 for capturing the content 302 by enabling at least one image capturing unit such as camera or any other device for capturing the content 302 or images published on the broadcasting device 104. In one aspect, the at least one image capturing unit may be mounted in a manner such that the at least one image capturing unit is able to capture the content 302 published on the broadcasting device 104. The at least one image capturing unit may utilize a high resolution camera to the increase in performance of the system 102. In addition to capturing the content 302, the image capturing module 214 is further configured to capture a first metadata 304 associated with the content 302. The first metadata 304 may comprise but not limited to, a time-stamp when the content 302 is captured, a global positioning system (GPS) co-ordinates of a location from where the content 302 is captured, orientation or an angle of capturing the content 302 and combinations thereof. In one embodiment of the invention, the content 302 and the first metadata 304 captured are stored in the first database 224.

In one embodiment, the system 102 may further enable the activity capturing module 216 to capture one or more behavioral activity data 308 associated with the user. In one aspect, the one or more behavioral activity data 308 is captured while the user is viewing the content 302 published on the broadcasting device 104. In one embodiment, the one or more a behavioral activity data 308 may comprise at least one of a gaze, a facial gesture, a head gesture, a hand gesture, variance in heartbeat, variance in blood pressure, variance in acceleration of a vehicle driven. In one aspect, the one or more behavioral activity data 308 may be captured by a plurality of sensors 206 that may be deployed around the user. The plurality of sensors 206 may comprise at least one of a gaze detection sensor, a gesture detection sensor, a blood-pressure detection sensor, a heartbeat sensor, an accelerometer sensor, a gyroscope, a barometer, a GPS sensor and combinations thereof. In an exemplary embodiment of the invention, the plurality of sensors 206 may deployed on the vehicle for capturing the one or more behavioral activity data 308 of the user while the user is viewing the content 302 when the vehicle is in motion.

In addition to capturing the one or more behavioral activity data 308, the activity capturing module 216 is further configured to capture the second metadata 310 associated with the one or more behavioral activity data 308. In one aspect, the second metadata 310 may comprise a time-stamp of the behavioral activities being captured, a global positioning system (GPS) co-ordinates of a location from where the behavioral activities being captured, orientation of the user or an angle of viewing of the content 302 by the user. In one embodiment of the invention, the one or more behavioral activity data 308 and the second metadata 310 captured are stored in the second database 226.

After capturing the first metadata 304 and the second metadata 310, the system 102 enables the analytics engine 218 to analyze the first metadata 304 and the second metadata 310. In order to analyze the first metadata 304 and the second metadata 310, the analytics engine 218 is configured to retrieve the first metadata 304 and the second metadata 310 from the first database 224 and the second database 226 respectively. After retrieving the first metadata 304 and the second metadata 310, the analytics engine 218 is further configured to analyze the first metadata 304 and the second metadata 310 by decoding the first metadata 304 and the second metadata 310 using the existing technologies of facial gesture recognition and gaze analysis, in order to deduce where the user is looking and were there any specific gestures involved. After decoding the first metadata 304 and the second metadata 310, the analytics engine 218 is further configured to map the first metadata 304 with the second metadata 310.

In one embodiment, a time-stamp of the content 302 captured, global positioning system (GPS) co-ordinates of a location from where the content 302 is captured, orientation or an angle of capturing the content 302 is mapped with a time-stamp of the behavioral activity data 308 being captured, a global positioning system (GPS) co-ordinates of a location from where the behavioral activities being captured, orientation of the user or an angle of viewing of the content 302 by the user respectively in order to determine the subset of content that may be relevant to the user.

Based on the mapping between the first metadata 304 and the second metadata 310, the analytics engine 218 further deduce the subset of content 312 of the content 302 that may be relevant to the user. In one embodiment, the subset of content 312 may be the content 312 published on the broadcasting device 104. In another embodiment, the subset of content 312 may be published on the broadcasting device 104. In one aspect, the analytics engine 218 may be configured for performing a search to obtain an additional content associated with the subset of content 312. The additional content is searched on Internet. In one aspect, the additional content may be searched by formulating one or more search strings using one or more keywords from the subset of content 312. In one aspect, the additional content and the subset of content 312 may comprise at least one of a text, a hyper-link, an audio clip, a video, an image and combinations thereof.

Subsequent to mapping between the first metadata 304 and the second metadata 310 to deduce the subset of content 312 of the content 302, the system 102 further enables the display module 220 to display the subset of content 312 on a display device for viewing the subset of content 312. In one embodiment, the system 102 may be further configured to detect the one or more behavioral activity data 308 in order to detect suspicious activities, consciousness level, and interaction level associated with the user. Further the system 102 may also perform advanced computing algorithms to determine the user conscious levels to make intelligent decisions in order to allow or revoke vehicle access. The present invention may also work as an anti-theft system for monitoring the user's biological responses to determine suspicious or theft-like behavior and thereby making a decision of raising an alarm.

### ADVANTAGES OF THE SYSTEM

The present invention enables a system and a method that provides a means of communication between a physical advertising medium such as billboard or signage or business establishment and a user moving around such physical advertising medium.

The present invention further enables reducing the communication barrier between the user and the physical advertising medium and also enhances the capability to capture information viewed by the user that can be stored or saved and analyzed at a later point.

The present invention further identifies where the user is looking to capture generic information and also determines the user's angle of vision by analyzing user's gaze gestures and therefore displays information that is relative to the user's requirements.

The present invention further proposes a solution to reduce the number and sizes of billboards or signage present indoors & outdoors.

The present invention may also be utilized by security services to capture and recognize facial structures and a system can then provide extensive information based on facial recognition.

The present invention may also be utilized by security services or authority services to identify any suspicious activity or theft-like behavior and thereby making a decision of raising an alarm.

Referring now to Figure 4, a method 400 for displaying a content 302 published on a broadcasting device 104 to a user is shown, in accordance with an embodiment of the present subject matter. The method 400 may be described in the general context of computer executable instructions. Generally, computer executable instructions can include routines, programs, objects, components, data structures, procedures, modules, functions, etc., that perform particular functions or implement particular abstract data types. The method 400 may also be practiced in a distributed computing environment where functions are performed by remote processing devices that are linked through a communications network. In a distributed computing environment, computer executable instructions may be located in both local and remote computer storage media, including memory storage devices.

The order in which the method 400 is described is not intended to be construed as a limitation, and any number of the described method blocks can be combined in any order to implement the method 400 or alternate methods. Additionally, individual blocks may be deleted from the method 400 without departing from the spirit and scope of the subject matter described herein. Furthermore, the method 400 can be implemented in any suitable hardware, software, firmware, or combination thereof. However, for ease of explanation, in the embodiments described below, the method 400 may be considered to be implemented in the above described system.

At block 402, the content 302 along with a first metadata 304 associated with the content 302 is captured. In one implementation, the content 302 and the first metadata 304 may be captured by the image capturing module 214 using the plurality of sensors 206 deployed around the user.

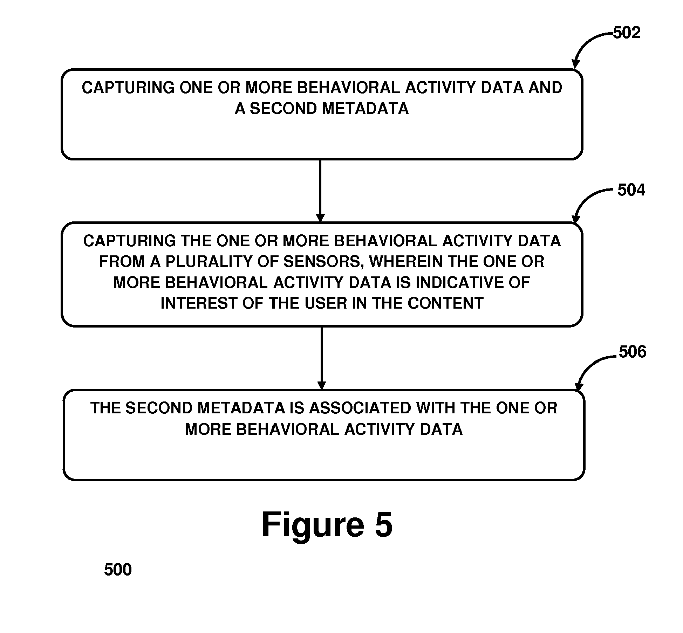

At block 404, one or more behavioral activity data 308 along with a second metadata 310 is captured. In one implementation, the one or more behavioral activity data 308 and the second metadata 310 may be captured by the activity capturing module 216. Further, the block 404 may be explained in greater detail in Figure 5.

At block 406, the first metadata 304 and the second metadata 310 captured are then analyzed to determine a subset of content 312 of the content 302. In one aspect, the subset of content 312 is relevant to the user. In one implementation, the first metadata 304 and the second metadata 310 may be analyzed by the analytics engine 218.

At block 406, the subset of content 312 determined by analyzing the first metadata 304 and the second metadata 310 is then displayed on a display device. In one implementation, the subset of content 312 may be displayed using the display module 220.

Referring now to Figure 5, a method 500 for capturing the one or more behavioral activity data 308 and the second metadata 310 is shown, in accordance with an embodiment of the present subject matter.

At block 502, the one or more behavioral activity data 308 and the second metadata 310 is captured.

At block 504, the one or more behavioral activity data 308 is captured from the plurality of sensors 206 deployed around the user. In one implementation, the one or more behavioral activity data 308 is indicative of interest of the user in the content 302

At block 506, the second metadata 310 is associated with the one or more behavioral activity data 308. In one implementation, the second metadata 310 may be captured by the activity capturing module 216 using the plurality of sensors 206 deployed around the user.

Although implementations for methods and systems for displaying the content 302 published on the broadcasting device 104 to a user have been described in language specific to structural features and/or methods, it is to be understood that the appended claims are not necessarily limited to the specific features or methods described. Rather, the specific features and methods are disclosed as examples of implementations for displaying the content 302 published on the broadcasting device 104 to the user.

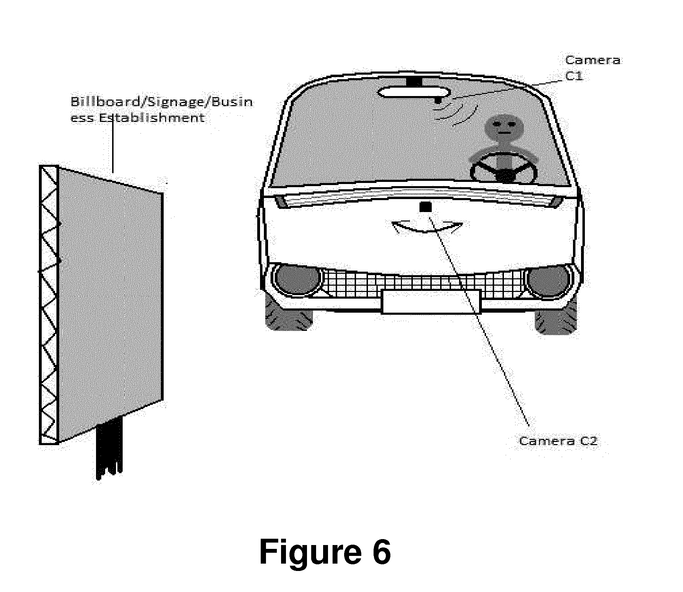

Referring to figure 6 is an exemplary embodiment illustrating communication between the system 102 mounted on a vehicle and a broadcasting device 104 such as a billboard or a signage or a business establishment. In this exemplary embodiment, two cameras i.e. C1, C2 as illustrated, may be integrated with the system 102. The system 102 may comprise one or more modules 210 that are stored in the memory 208. The one or more modules 210 may comprise the image capturing module 214, the activity capturing module 216, the analytics engine 218 and the display module 220. In order to establish the communication between the system 102 and the broadcasting device 104, the activity capturing module 216 is configured to capture the one or more behavioral activity data 308 of a driver driving the vehicle, along with the second metadata 310. In order to capture the one or more behavioral activity data 308 and the second metadata 310, the activity capturing module 216 enables the camera C2 to capture the one or more behavioral activity data 308 along with the second metadata 310. On the other hand, the image capturing module 214 is further configured to capture the content 302 and the first metadata 304 associated with the content 302. In order to capture the content 302 and the first metadata 304, the image capturing module 214 enables the camera C1 to capture the content 302 and the first metadata 304. Upon capturing the first metadata 304 and the second metadata 310, the analytics engine 218 is further configured to perform analysis on the first metadata 304 and the second metadata 310 in order to determine a subset of content 312 of the content 302. Based on the analysis, the system 102 may determine that the subset of content 312 is relevant to the driver driving the vehicle. The display module 220 further displays the subset of content 312 on a display device associated with the driver and further stores the subset of content 312 in the memory 208 for future reference the driver. In one example, the system 102 may be a car-infotainment system having a display device that displays the subset of content 312 that may be accessed by the driver.

The illustrations of arrangements described herein are intended to provide a general understanding of the structure of various embodiments, and they are not intended to serve as a complete description of all the elements and features of systems that might make use of the structures described herein. Many other arrangements will be apparent to those of skill in the art upon reviewing the above description. Other arrangements may be utilized and derived there from, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Although the invention has been described in terms of specific embodiments and applications, persons skilled in the art can, in light of this teaching, generate additional embodiments without exceeding the scope or departing from the spirit of the invention described herein.

## Claims

1. A method for displaying a content published on a broadcasting device to a user, the method comprising:
capturing, by a processor, the content and a first metadata associated with the content;
capturing, by the processor, one or more behavioral activity data and a second metadata, wherein the one or more behavioral activity data is captured from a plurality of sensors deployed around the user, and wherein the one or more behavioral activity data is indicative of interest of the user in the content, and wherein the second metadata is associated with the one or more behavioral activity data;
analyzing, by the processor, the first metadata and the second metadata to determine a subset of content of the content, wherein the subset of content is relevant to the user; and
displaying, by the processor, the subset of content on a display device associated with the user.

2. The method of claim 1, wherein the content comprises at least one of an advertisement information, weather information, news information, sports information, places/physical location information, movie information, hospital or a mall and stock-market information.

3. The method of claim 1, wherein the broadcasting device is an audio visual device that comprises at least one of a billboard, a signage, a display board, an Out of Home advertising platform, and a business establishment.

4. The method of claim 1, wherein the first metadata comprises at least one of a time-stamp, a global positioning system (GPS) co-ordinates, a orientation and an angle of capturing the content.

5. The method of claim 1, wherein the one or more behavioral activity data comprises at least one of a gaze, a facial gesture, a head gesture, a hand gesture, variance in heartbeat, variance in blood pressure, and variance in acceleration of a vehicle driven by the user.

6. The method of claim 1, wherein the second metadata comprise at least one of a time-stamp, a global positioning system (GPS) co-ordinates, a orientation of the user and an angle of viewing the content by the user.

7. The method of claim 1, further comprising performing a search to obtain an additional content associated with the subset of content, wherein the additional content is searched on Internet, and wherein the additional content is displayed to the user along with the subset of content.

8. The method of claim 7, wherein the additional content is searched by formulating one or more search strings using one or more keywords from the subset of content, and wherein the additional content and the subset of content comprise at least one of a text, a hyper-link, an audio clip, a video, an image and combinations thereof.

9. The method of claim 1, wherein the one or more behavioral activity data is analyzed to detect suspicious activities, consciousness level, and interaction level associated with the user.

10. A system 102 for displaying a content 302 published on a broadcasting device 104 to a user, the system 102 comprising:
a processor 202;
a plurality of sensors 206 coupled with the processor 202, and wherein the plurality of sensors 206 are deployed around the user; and
a memory 208 coupled to the processor 202, wherein the processor 202 is capable of executing a plurality of modules stored in the memory, and wherein the plurality of modules comprising:
an image capturing module 214 configured to capture the content 302 and a first metadata 304 associated with the content 302;
an activity capturing module 216 configured to capture one or more behavioral activity data 308 and a second metadata 310, wherein the one or more behavioral activity data 308 is captured from the plurality of sensors 206, and wherein the one or more behavioral activity data 308 is indicative of interest of the user in the content 302, and wherein the second metadata 310 is associated with the one or more behavioral activity data 308;
an analytics engine 218 configured to analyze the first metadata 304 and the second metadata 310 to determine a subset of content 312 of the content 302, wherein the subset of content 312 is relevant to the user; and
a display module 220 configured to display the subset of content 312 on a display device associated with the user.

11. The system of claim 10, wherein the content 302 and the first metadata 304 are stored in a first database 224.

12. The system of claim 10, wherein the one or more behavioral activity data 308 and the second metadata 310 are stored in a second database 226.

13. The system of claim 10, wherein the one or more behavioral activity data 308 is captured by using the plurality of sensors 206, and wherein the plurality of sensors 206 comprises at least one of a gaze detection sensor, a gesture detection sensor, a blood-pressure detection sensor, a heartbeat sensor, an accelerometer sensor, a gyroscope, a barometer, and a GPS sensor.

14. A computer program product having embodied thereon a computer program for displaying a content published on a broadcasting device to a user, the computer program product comprising:
a program code for capturing the content and a first metadata associated with the content;
a program code for capturing one or more behavioral activity data and a second metadata, wherein the one or more behavioral activity data is captured from a plurality of sensors deployed around the user, and wherein the one or more behavioral activity data is indicative of interest of the user in the content, and wherein the second metadata is associated with the one or more behavioral activity data;
a program code for analyzing the first metadata and the second metadata to determine a subset of content of the content, wherein the subset of content is relevant to the user; and
a program code for displaying the subset of content on a display device associated with the user or storing it in memory for future use.
